# EUROPEAN PATENT APPLICATION

(11) **EP 3 188 464 A1**
(43) Date of publication of application: **05.07.2017**
(21) Application number: 15837003.1
(22) Date of filing: 10.08.2015
(51) Int. Cl.: H04M 3/56, H04N 7/15

(54) **SESSION CONTROL SYSTEM, COMMUNICATION TERMINAL, COMMUNICATION SYSTEM, SESSION CONTROL METHOD, AND PROGRAM**

(30) Priority: 26.08.2014 JP 2014171146
(71) Applicant: Ricoh Company, Ltd., Tokyo 143-8555 (JP)
(72) Inventor: TAMURA, Hideki, Tokyo 143-8555 (JP)
(74) Representative: Schwabe - Sandmair - Marx
(86) International application number: PCT/JP2015/072694
(87) International publication number: WO 2016/031549

(57) **Abstract**

A session control unit of a management system (50), in response to a request for starting communication between communication terminals (10a, 10c), controls establishing a communication session sed1 for sending image data and sound data between the communication terminals (10a, 10c), and controls establishing a communication session sed2 for sending operation data of an electronic pen between IWBs (20a, 20c) corresponding to the communication terminals (10a, 10b), respectively.

## Description

### BACKGROUND OF THE INVENTION

### 1. Field of the Invention

0001 The disclosures herein generally relate to an invention that controls a session for transmitting content data between communication terminals.

### 2. Description of the Related Art

0002 Communication systems that perform a telephone call, a video conference or the like via a communication network such as the Internet or a dedicated line have become popular in recent years due to a demand for reducing travel costs and time of parties. In such a communication system when communication starts between communication terminals, content data such as image data or sound data are sent/received, thereby realizing communication between bases.

0003 In order to perform the communication between bases smoothly, a method for sharing other content between bases in addition to content for a telephone call has been proposed. For example, according to a session coordination server disclosed in Patent document 1, Web contents can be shared between the bases while having a conversation between the bases by SIP (Session Initiation Protocol) phones.

0004 However, although the method disclosed in Patent document 1 is suitable for sharing content that is prepared in advance, the method may not be suitable for sharing content that occurs in real time depending on a situation of the conversation. Then, a method for realizing the communication between bases by using a plurality of communication sessions has been employed. For example, a communication session for sending image data and sound data between video conference terminals, and a communication session for sending/receiving operation data that indicate strokes of characters between interactive white boards are established respectively, and thereby a screen on the white board can be shared in real time along with the conversation.

### [Citation List]

### [Patent Literature]

0005
[PTL 1] Japanese Unexamined Patent Application Publication No. 2011-238201
[PTL 2] Japanese Unexamined Patent Application Publication No. 2012-50063

### SUMMARY OF THE INVENTION

### [Technical Problem]

0006 However, in order to start the communication using the plurality of communication sessions, at each communication terminal of the video conference terminal and the interactive white board, for example, information is sent specifying a destination or the like, to require establishment of each communication session. Therefore, a problem occurs due to increase of a burden involved with the process on the side the communication terminal.

### [Solution to Problem]

0007 According to an aspect of the present invention, a session control system controls a session for sending content data between communication terminals. The session control system includes a session control unit configured to control establishing a first session for sending first content data between a first communication terminal and a second communication terminal in response to a request for starting communication between the first communication terminal and the second communication terminal, and configured to control establishing a second session for sending second content data between a predetermined communication terminal corresponding to the first communication terminal and a predetermined communication terminal corresponding to the second communication terminal.

### [Advantageous effect of Invention]

0008 As described above, according to the embodiment, an effect that a load accompanying a process on a side of communication terminals can be reduced when a communication using the plurality of communication terminal sessions starts is provided.

### BRIEF DESCRIPTION OF THE DRAWINGS

0009
[FIG. 1] FIG. 1 is a schematic view illustrating a communication system according to an embodiment.
[FIG. 2] FIG. 2 is an external view illustrating an example of a speech terminal.
[FIG. 3] FIG. 3 is a hardware configuration diagram illustrating various communication terminals such as the speech terminal and the interactive whiteboard.
[FIG. 4] FIG. 4 is a hardware configuration diagram illustrating a management system.
[FIG. 5] FIG. 5 is functional block diagrams illustrating the speech terminal, the interactive whiteboard and the management system, respectively.
[FIG. 6A] FIG. 6A is a conceptual diagram illustrating an authentication management table for a terminal managed by the management system.
[FIG. 6B] FIG. 6B is a conceptual diagram illustrating a terminal management table managed by the management system.
[FIG. 6C] FIG. 6C is a conceptual diagram illustrating a coordination management table managed by the management system.
[FIG. 7] FIG. 7 is a sequence diagram illustrating a process until a session between each speech terminal and the management system is established.
[FIG. 8] FIG. 8 is a sequence diagram illustrating a process of establishing a communication session between various communication terminals.
[FIG. 9] FIG. 9 is a flow diagram illustrating a process of determining whether coordination between various communication terminals can be performed.
[FIG. 10A] FIG. 10A is a diagram depicting an example of a screen displayed on a display device.
[FIG. 10B] FIG. 10B is a diagram depicting another example of a screen displayed on a display device.
[FIG. 10C] FIG. 10C is a diagram depicting yet another example of a screen displayed on a display device.
[FIG. 10D] FIG. 10D is a diagram depicting still another example of a screen displayed on a display device.
[FIG. 11] FIG. 11 is a sequence diagram illustrating a process of changing a setting of a coordination function.
[FIG. 12] FIG. 12 is a conceptual diagram illustrating a state of sending/receiving various pieces of information in the communication system.

### DESCRIPTION OF THE PREFERRED EMBODIMENTS

0010 In the following, embodiments of the present invention will be described with reference to the accompanying drawings.

0011

### <<General arrangement of embodiment>>

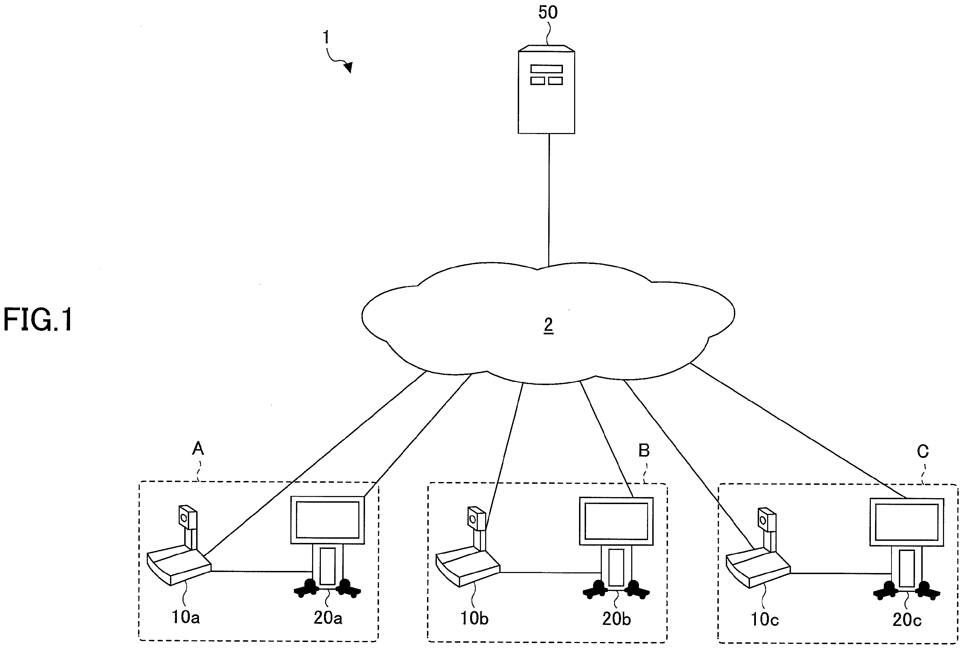

FIG. 1 is a schematic view illustrating a communication system according to an embodiment of the present invention. As illustrated in FIG. 1, the communication system 1 includes communication terminals such as video conference terminals (10a, 10b, 10c), interactive whiteboards (in the following, denoted as "IWB") (20a, 20b, 20c) and a management system 50 for managing the respective communication terminals 10. In the following, in a case of representing an arbitrary communication terminal of the video conference terminals (10a, 10b, 10c), it is denoted as a speech terminal 10. Moreover, in a case of representing an arbitrary IWB of the IWBs (20a, 20b, 20c), it is denoted as an IWB 20. The management system 50 is a computer provided with a server function.

0012

By the communication system 1, speech communication can be performed between users of the speech terminals (10a, 10b, 10c). The speech communication can be realized by sound or sound and video (image). Moreover, a screen in which a character, a figure, a symbol or the like is drawn can be shared from within users of the IWBs (20a, 20b, 20c).

0013 Moreover, the speech terminal 10, the IWB 20 and the management system 50 can perform communication by a communication network such as the Internet, a mobile telephone network or a LAN (Local Area Network). At each of locations (A, B, C), a speech terminal 10 and an IWB 20 are arranged, and a video conference can be performed between the locations by using both the speech terminal 10 and the IWB 20. In FIG. 1, in order to make explanation simple, at each of the locations (A, B, C), one speech terminal 10 and one IWB 20 are illustrated. But, plural terminals or plural IWBs may be arranged. Moreover, at each of the locations (A, B, C), for example, a communication terminal other than the speech terminal 10 and the IWB 20, such as a projector or a digital signage device may be arranged for a communications connection via the communication network 2.

0014

### «Hardware configuration of the embodiment»

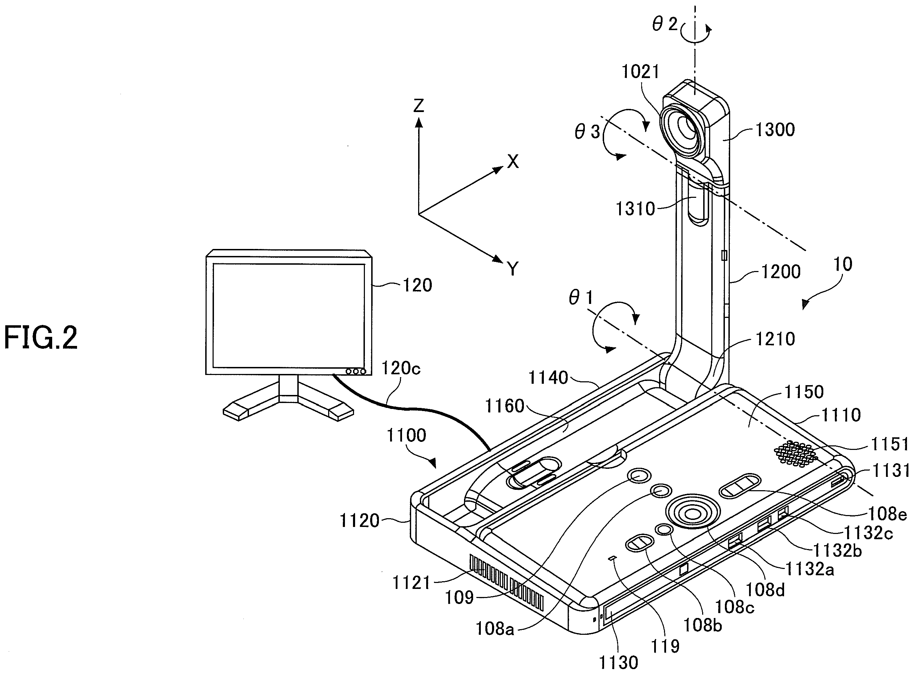

Next, a hardware configuration of the embodiment will be described. FIG. 2 is an external view of a speech terminal 10 according to the embodiment. As illustrated in FIG. 2, the speech terminal 10 includes a casing 1100, an arm 1200 and a camera housing 1300. Among these portions, a front wall 1120 of the casing 1100 has an inlet face 1121 including a plurality of inlet holes, and a back wall 1110 of the casing 1100 has an exhaust face (not illustrated) on which a plurality of exhaust holes are formed. Accordingly, by driving a cooling fan included in the casing 1100, air in front of the speech terminal 10 can be taken in via the inlet face 1121 and exhausted to the rear of the speech terminal 10 via the exhaust face. A right-side wall 1130 of the casing 1100 has a sound pickup hole 1131, and a built-in microphone 114, described later, is capable of picking up voice, sound, noise or the like.

0015 An operation panel 1150 is formed toward the right-side wall 1130 on the casing 1100. The operation panel 1150 has a plurality of operation buttons (108a to 108e) described later, a power switch 109 described later, and an alarm lamp 119 described later. The operation panel 1150 also has a sound output face 1151, which is formed of a plurality of sound output holes for allowing output sound from a built-in speaker 115, described later, to pass through. In addition, an accommodation portion 1160 serving as a recess for accommodating the arm 1200 and the camera housing 1300 is formed toward a left-side wall 1140 of the casing 1100. A plurality of connection ports (1132a to 1132c) for electrically coupling cables to an external device connection interface (I/F) 118 described later are provided on the right-side wall 1130 of the casing 1100. Additionally, a connection port for electrically coupling a cable 120c for a display device 120 to the external device connection I/F 118 described later is provided toward the left-side wall 1140 of the casing 1100.

0016 The following description uses the term "operation button 108" for indicating an arbitrary one of the operation buttons (108a to 108e), and the term "connection port 1132" for indicating an arbitrary one of the connection ports (1132a to 1132c).

0017 Next, the arm 1200 is attached to the casing 1100 via a torque hinge 1210 and is configured to be rotatable in the vertical direction within a range of a tilt angle θ1 of 135 degrees with respect to the casing 1100. FIG. 2 indicates a state in which the tilt angle θ1 is 90 degrees. The camera housing 1300 has a built-in camera 1021, which will be described later, and the camera 1021 can capture an image of a user, a document, a room, or the like. In addition, the camera housing 1300 has a torque hinge 1310. The camera housing 1300 is attached to the arm 1200 via the torque hinge 1310. The camera housing 1300 is configured to be rotatable in the vertical and horizontal directions within a range of a pan angle θ2 of ±180 degrees and a tilt angle θ3 of ±45 degrees with respect to the arm 1200, where the state illustrated in FIG. 2 is 0 degrees.

0018 The external view illustrated in FIG. 2 is only exemplary and the appearance is not restricted. The speech terminal 10 may be, for example, a generic PC, a smart phone, a tablet terminal or the like.
The camera 112 and the microphone 114 need not necessarily be built-in devices and may be external devices.

0019 The management system 50 has the same external appearance as that of a generic server computer, and a description of the external appearance will be omitted. Moreover, the IWB 20 has the same external appearance as that of a generic IWB, and a description of the external appearance will be omitted. The IWB 20 is provided with operation buttons corresponding to the operation buttons (108a to 108e) of the speech terminal 10.

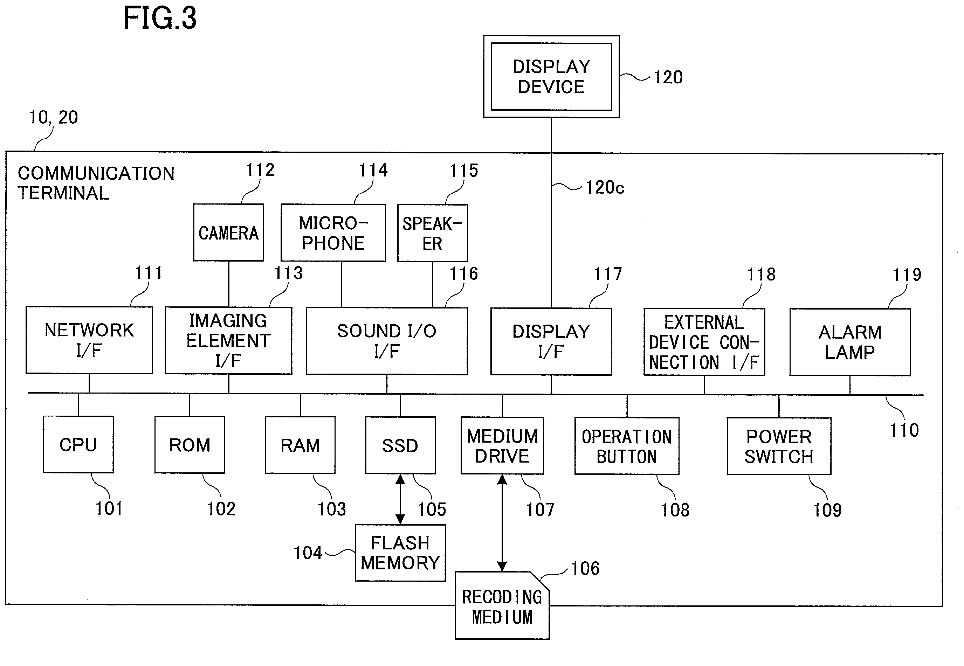

0020 FIG. 3 is a hardware configuration diagram of various communication terminals, such as a speech terminal 10 and an IWB 20, according to the present embodiment. As illustrated in FIG. 3, each of the various communication terminals such as the speech terminal 10 and the IWB 20 includes a central processing unit (CPU) 101 that controls an overall operation of the communication terminals, a read-only memory (ROM) 102 that stores a program used for driving the CPU 101, such as an initial program loader (IPL), a random-access memory (RAM) 103 used as a work area for the CPU 101, a flash memory 104 that stores various types of data, such as programs for various types of terminals such as the speech terminal 10 and the IWB 20, image data and sound data, a solid state drive (SSD) 105 that controls reading/writing of various types of data from/to the flash memory 104 in accordance with control from the CPU 101, a medium drive 107 that controls reading/writing (storage) of data from/to a recording medium 106 such as a flash memory, the operation button 108 operated in a case of selecting a destination, the power switch 109 for turning ON/OFF the power of the speech terminal 10, and a network interface (I/F) 111 for performing data communication using the communication network 2.

0021 Moreover, each of the various communication terminals such as the speech terminal 10 and the IWB 20 includes the built-in camera 112, which captures an image of a subject and obtains image data in accordance with control from the CPU 101; an imaging element I/F 113 that controls driving of the camera 112; the built-in microphone 114, which receives a sound input; the built-in speaker 115, which outputs sound; a sound input/output I/F 116 that processes inputting/outputting of a sound signal between the microphone 114 and the speaker 115 in accordance with control from the CPU 101; a display I/F 117 that communicates image data to an external display device 120 in accordance with control from the CPU 101; the external device connection I/F 118 for coupling various external devices; the alarm lamp 119, which indicates an abnormality of various functions of each of the various communication terminals such as the speech terminal 10 and the IWB 20; and a bus line 110 such as an address bus or a data bus for electrically coupling the above-described elements as illustrated in FIG. 3.

0022 The display device 120 includes a liquid crystal display device (LCD), an organic electroluminescence (EL) display device, or the like, and displays an image of a subject, an icon for operation, or the like. Moreover, the display device 120 is coupled to the display I/F 117 by the cable 120c. The cable 120c may be an analog red green blue (RGB) (video graphic array (VGA)) signal cable, a component video cable, a high-definition multimedia interface (HDMI(trademark registered)) signal cable, or a digital video interactive (DVI) signal cable.

0023 The camera 112 includes a lens and a solid-state imaging element that converts light into electric charges to digitize an image (video) of a subject. As the solid-state imaging element, for example, a complementary metal-oxide-semiconductor (CMOS) or a charge-coupled device (CCD) is used.

0024 The external device connection I/F 118 is capable of coupling external devices such as an external camera, an external microphone and an external speaker, respectively, by using a Universal Serial Bus (USB) cable or the like, which is inserted into the connection port 1132 of the casing 1100. When an external camera is coupled, in accordance with control from the CPU 101, the external camera is driven in preference to the built-in camera 112. Similarly, when an external microphone is coupled or an external speaker is coupled, in accordance with control from the CPU 101, the external microphone or the external speaker is driven in preference to the built-in microphone 114 or the built-in speaker 115.

0025 The recording medium 106 is configured to be removable from each of the various communication terminals such as the speech terminal 10 and the IWB 20. In addition, a non-volatile memory that reads or writes data in accordance with control from the CPU 101 is not limited to the flash memory 104, and an electrically erasable and programmable read-only memory (EEPROM) may be used.

0026 The display device 120 may be built-in in the main body of each of the various communication terminals such as the speech terminal 10 and the IWB 20. Moreover, in each of the various types of communication terminals, a hardware configuration depending on its function, even if not illustrated in FIG. 3, may be provided. Furthermore, a part of the hardware configuration illustrated in FIG. 3 may not necessarily be provided. For example, the display device 120 of the IWB 20 may be provided with a read-in device that reads in a stroke drawn by an electronic pen. Moreover, the IWB 20 may not necessarily be provided with the camera 112, the imaging element I/F 113, the microphone 114, the speaker 115, or the sound input/output I/F 116. Moreover, the speech terminal 10 may not necessarily be provided with a dedicated display device, and may share the display device 120 of the IWB 20 with the IWB 20. In this case, by coupling the display I/F 117 of the speech terminal 10 with the display I/F 117 of the IWB 20, an image based on information output from the display I/F of the speech terminal 10 can be output from the display device 120 of the IWB 20.

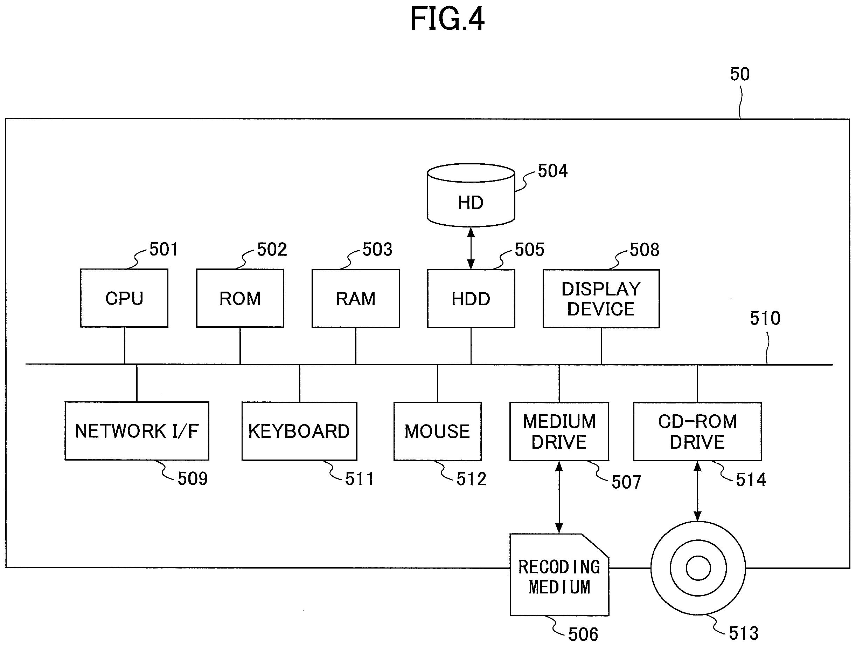

0027 FIG. 4 is a hardware configuration diagram of the management system 50 according to the present embodiment. The management system 50 includes a CPU 501 that controls the overall operation of the management system 50; a ROM 502 that stores a program used for driving the CPU 501, such as an IPL; a RAM 503 used as a work area for the CPU 501; an HD 504 that stores various types of data, such as a program for the management system 50; a hard disk drive (HDD) 505 that controls reading/writing of various types of data from/to the HD 504 in accordance with control from the CPU 501; a medium drive 507 that controls reading/writing (storage) of data from/to a recording medium 506 such as a flash memory; a display device 508 that displays various types of information such as a cursor, a menu, a window, characters or an image; a network I/F 509 for communicating data using the communication network 2; a keyboard 511 including a plurality of keys for entering characters, numerals, various instructions or the like; a mouse 512 that performs selection and execution of various instructions, selection of a processing target, movement of a cursor or the like; a compact disc read-only memory (CD-ROM) drive 514 that controls reading/writing of various types of data from/to a CD-ROM 513 serving as an example of a removable recording medium; and a bus line 510 such as an address bus or a data bus for electrically coupling the above-described elements as illustrated in FIG. 4. 0028

### <<Functional configuration of the embodiment>>

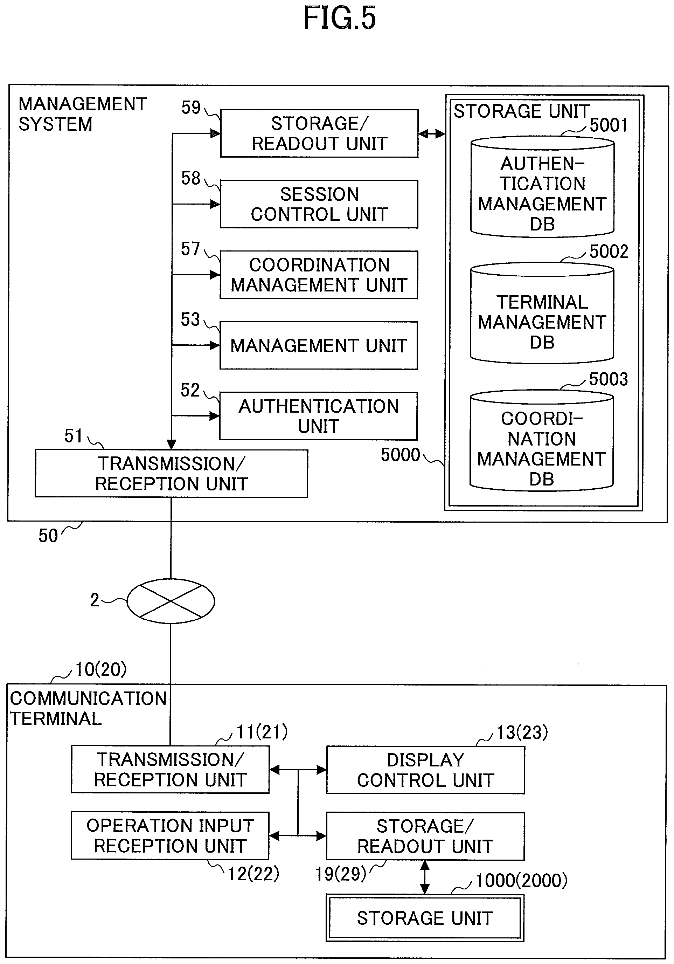

Next, the functional configuration of the embodiment will be described. FIG. 5 is a functional block diagram of the speech terminal 10, the IWB 20 and the management system 50 of the communication system 1 according to the present embodiment. In FIG. 5, the terminal 10, the IWB 20 and the management system 50 are coupled to be capable of communicating data via the communication network 2. Because the speech terminal 10 and the IWB 20 have the same function regarding the following function parts which will be described in the embodiment, a reference numeral assigned to each functional configuration of the IWB 20 is indicated with parentheses after a reference numeral assigned to each corresponding functional configuration of the speech terminal 10. 0029

### <Functional configuration of communication terminal>

The speech terminal 10 as a communication terminal includes a transmission/reception unit 11, an operation input reception unit 12, a display control unit 13 and a storage/readout unit 19. The IWB 20 as a communication terminal includes a transmission/reception unit 21, an operation input reception unit 22, a display control unit 23 and a storage/readout unit 29, in the same way as the speech terminal 10. Because the transmission/reception unit 21, the operation input reception unit 22, the display control unit 23, and the storage/readout unit 29 have the same functions as the transmission/reception unit 11, the operation input reception unit 12, the display control unit 13, and the storage/readout unit 19, respectively, an explanation thereof will be omitted. The respective elements are functions that are realized by operating one of the elements illustrated in FIG. 3 in response to a command from the CPU 101 in accordance with a program loaded from the flash memory 104 onto the RAM 103. Moreover, the speech terminal 10 or the IWB 20 has a storage unit (1000, 2000) configured with the ROM 102, the RAM 103 and the flash memory 104.

0030

### (Respective functional configurations of communication terminal)

Next, with reference to FIGs. 3 and 5, respective functional configurations of the speech terminal 10 and the IWB 20 will be described in detail. In the following description of the respective functional configurations of the speech terminal 10 and the IWB 20, from within the respective elements illustrated in FIG. 3, relationships with main elements for realizing the respective functional configurations of the speech terminal 10 and the IWB 20 will also be described.

0031 The transmission/reception units (11, 21) of the speech terminal 10 and the IWB 20, illustrated in FIG. 5, are enabled by commands from the CPU 101 and via the network I/F 111, and perform transmission/reception of various types of data (or information) to/from the speech terminal of the communication partner's side, each apparatus, a system or the like via the communication network 2.

0032 The operation input reception unit (12, 22) is enabled by a command from the CPU 101, the operation button (108a, 108b, 108c, 108d, 108e) and the power switch 109, and receives various inputs from a user or various types of selections by the user. For example, when the user turns the power switch 109 ON, the operation input reception unit (11, 22), illustrated in FIG. 5, receives the electric power ON, and sets the electric power to ON.

0033 The display control unit (13, 23) is enabled by a command from the CPU 101 and the display I/F 117, and controls transmission of image data sent from the communication partner's side to the display device 120 upon speaking. In a case of the IWB 20, the image data to be sent to the display device may be image information based on operation data sent from a communication partner.

0034 The storage/readout unit (19, 29) is executed by a command from the CPU 101 together with the SSD 105, or enabled by the command from the CPU 101. The storage/readout unit performs a process of storing various types of data into the storage unit (1000, 2000) or extracting various types of data from the storage unit (1000, 2000).

0035

### <Functional configuration of management system>

The management system 50 includes a transmission/reception unit 51, an authentication unit 52, a management unit 53, a coordination management unit 57, a session control unit 58 and a storage/readout unit 59. These elements are functions or means that are enabled by operating one of the elements illustrated in FIG. 4 in response to a command from the CPU 501 in accordance with a program for the management system 50 loaded from the HD 504 onto the RAM 503. In addition, the management system 50 includes a storage unit 5000 configured with the HD 504. The storage unit 5000 includes an authentication management DB 5001 configured through an authentication management table which will be described later, a terminal management DB 5002 configured through a terminal management table, and a coordination management DB 5003 configured through a coordination management table.

0036

### (Terminal authentication management table)

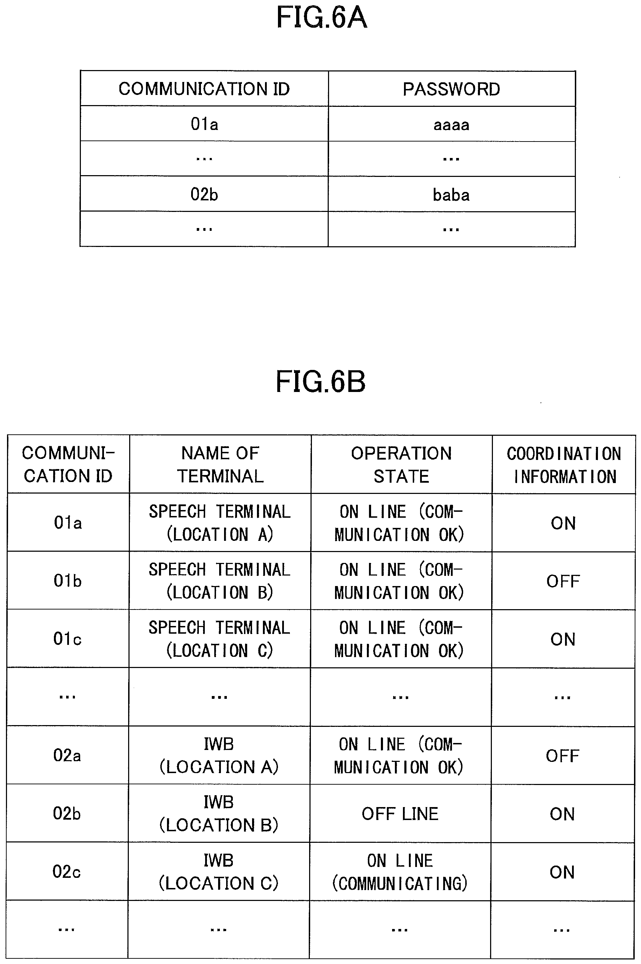

FIG. 6A is a conceptual diagram illustrating the terminal authentication management table. In the terminal authentication management table, a password is managed in association with a communication ID for identifying a speech terminal 10 or an IWB 20 of communication destination. The communication ID here may be an ID stored in a communication terminal in advance or may be an ID which a user inputs to the communication terminal. When the communication ID is input to the communication terminal, the communication ID sent from the communication terminal upon the login request is managed in the management system 50 in association with the communication terminal of the login request source, and thereby the communication terminal can be identified based on the communication ID. The explanation continues assuming that communication IDs of the speech terminals (10a, 10b, 10c) are "01a, 01b, 01c", respectively, and communication IDs of the IWBs (20a, 20b, 20c) are "02a, 02b, 02c", respectively.

0037

### (Terminal Management Table)

FIG. 6B is a conceptual diagram illustrating the terminal management table. In the terminal management table, a terminal name, an operation state of each communication terminal, and coordination information indicating whether a start of communication of the communication terminal is coordinated with initiating communication of another communication terminal are managed in association with each other for communication ID of each of various types of communication terminals such as the speech terminal 10 or the IWB 20. The operation state indicates "online", which is a state where the communication terminal indicated by the communication ID is coupled to the management system 50, or "offline", which is a state where the communication terminal is not coupled to the management system 50. Furthermore, the "online" includes a state where communication with the communication terminal indicated by the communication ID is possible ("communication OK") and a state where the communication terminal indicated by the communication ID is communicating ("communicating"). Moreover, the coordination information includes "ON" indicating that the function of causing communication of another communication terminal to start in coordination with the start of communication of the communication terminal is valid, and "OFF" indicating that the function is not valid.

0038

### (Coordination management table)

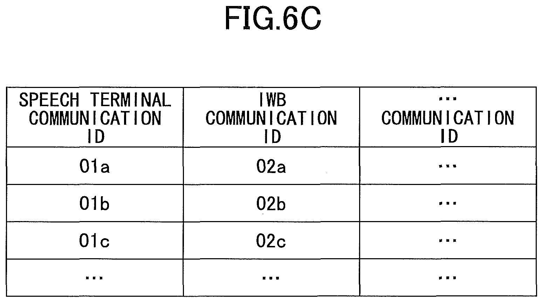

FIG. 6C is a conceptual diagram illustrating the coordination management table. In the coordination management table, for the communication ID of each of the speech terminals 10, the communication ID of the IWB 20 operated in coordination with the speech terminal 10 is managed in association with the communication ID of the speech terminal 10. In a case of operating other communication terminals such as a projector or a digital signage device in coordination with the speech terminal 10 or the IWB 20, in the coordination management table, a communication ID of the other communication terminals may be managed in association with the communication ID of the speech terminal 10 and the communication ID of the IWB 20. 0039

### (Respective functional configurations of management system)

Next, functional configuration of the management system 50 will be described in detail. Note that, in the following description of functional configuration of the management system 50, from within elements illustrated in FIG. 4, relationships with main elements for realizing the functional configuration of the management system 50 will also be described.

0040 The transmission/reception unit 51 is enabled by the CPU 501 executing a command. The transmission/reception unit 51 performs transmission/reception of various types of data (or information) to/from the respective communication terminals, an apparatus or a system via the communication network 2 by using the network I/F 509.

0041 The authentication unit 52, by a command from the CPU 501, searches the authentication management table (See FIG. 6A) with a communication ID and a password received via the transmission/reception unit 51 as search keys and determines whether the same pair of a communication ID and a password is managed in the authentication management table, and thereby performs authentication of a communication terminal.

0042 The management unit 53 is enabled by the CPU 501 executing a command. The management unit 53 stores and manages, in the terminal management table (see FIG. 6B), for each communication ID and terminal name of the speech terminal 10 and of the IWB 20, an operation state of the speech terminal 10 or the IWB 20 in association with one another.

0043 The coordination management unit 57 is enabled by the CPU 201 executing a command. The coordination management unit 57 determines whether operations between communication terminals can be coordinated.

0044 The session control unit 58 is enabled by the CPU 201 executing a command. The session control unit 58 performs a control for a communication session of sending content data between communication terminals. In the following, a communication session between speech terminals 10 will be denoted as a communication session sed1, and a communication session between IWBs 20 will be denoted as a communication session sed2. Moreover, the above-described control includes a control for establishing a communication session, a control for causing a speech terminal 10 to join the established communication session, a control for disconnecting the communication session or the like.

0045 The storage/readout unit 59 is enabled by the CPU 501 executing a command. The storage/readout unit 59 performs processing to store various types of data in the storage unit 5000 or extract various types of data stored in the storage unit 5000 by using the HDD 505.

0046

### «Process or operation of embodiment»

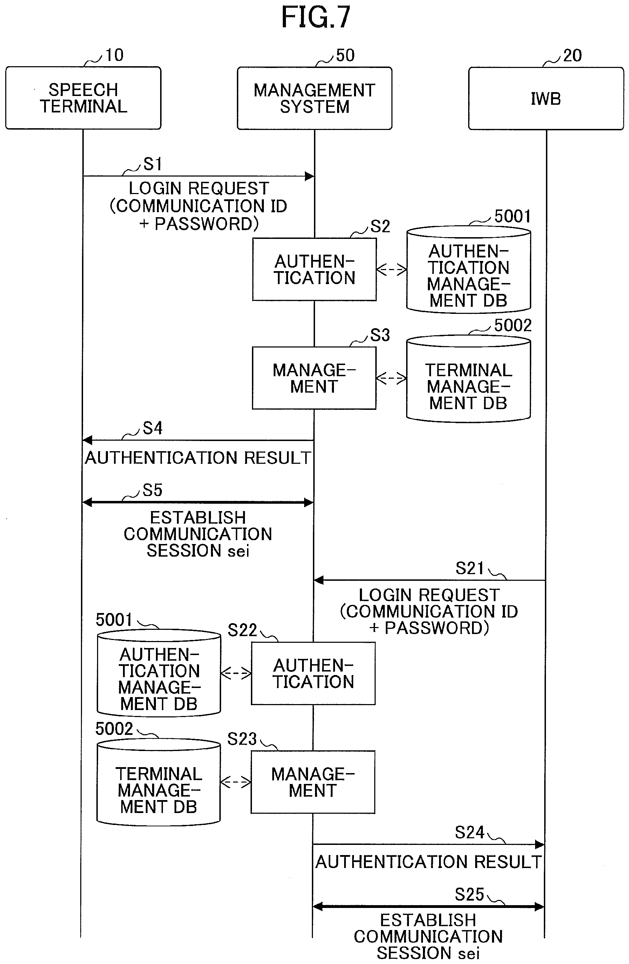

Subsequently, a process or an operation of the speech terminal 10, the IWB 20, and the management system 50 configuring the communication system 1 according to the present embodiment will be described. Moreover, FIG. 7 is a sequence diagram illustrating a process until a communication session between communication terminals is established.

0047 As illustrated in FIG. 7, the speech terminal 10 performs a login request to the management system 50 by using the transmission/reception unit 11 (step S1). The login request includes a communication ID for identifying the speech terminal 10 of the login request source and a password. Accordingly, the transmission/reception unit 51 of the management system 50 receives the login request with the communication ID and the password.

0048 Next, the authentication unit 52 performs authentication of the speech terminal 10 of the login request source by determining whether the same pair of the communication ID and the password received by the transmission/reception unit 51 is managed in the authentication management table (see FIG. 6A) (step S2). Then, when it is determined to be a valid speech terminal by the authentication, the management unit 53 sets an operation state to "ONLINE" for a corresponding communication ID in the terminal management table (see FIG. 6B) (step S3).

0049 Next, the transmission/reception unit 51 sends an authentication result to the speech terminal 10 of the login request source (step S4). Accordingly, the transmission/reception unit 11 receives the authentication result. Then, when it is determined to be a valid speech terminal in above-described step S2, a communication session "sei" is established between the speech terminal 10 of the login request source and the management system 50 (step S5). In order to distinguish from each of the communication sessions between communication terminals ("sed1", "sed2"), a communication session between various communication terminals and the management system 50 will be denoted as a communication session "sei".

0050 Similarly, as illustrated in FIG. 7, the IWB 20 performs a login request to the management system 50 by using the transmission/reception unit 21 (step S21). The login request includes a communication ID for identifying the IWB 20 of the login request source and a password. Accordingly, the transmission/reception unit 51 of the management system 50 receives the login request with the communication ID and the password.

0051 Next, the authentication unit 52 performs authentication of the IWB 20 of the login request source by determining whether the same pair of the communication ID and the password received by the transmission/reception unit 51 is managed in the authentication management table (see FIG. 6A) (step S22). Then, when it is determined to be a valid IWB by the authentication, the management unit 53 sets an operation state to "ONLINE (communication ok)" for a corresponding communication ID in the terminal management table (see FIG. 6B) (step S23).

0052 Next, the transmission/reception unit 51 sends an authentication result to the IWB 20 of the login request source (step S24). Accordingly, the transmission/reception unit 21 receives the authentication result. Then, when it is determined to be a valid IWB in above-described step S22, a communication session "sei" is established between the IWB 20 of the login request source and the management system 50 (step S25).

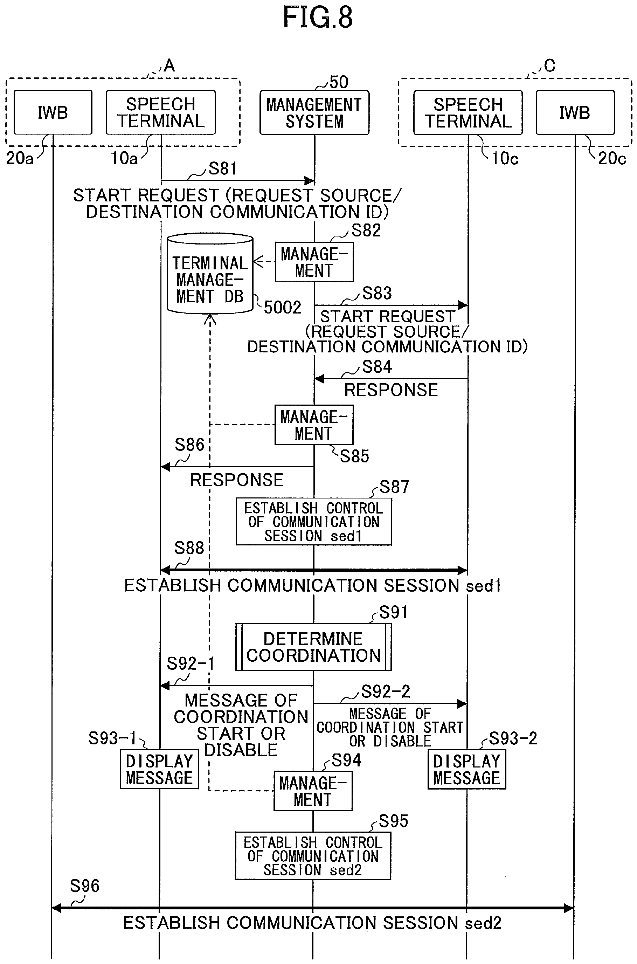

0053 Next, with reference to FIG. 8, a process for establishing a communication session for sending content data between communication terminals will be described. FIG. 8 is a sequence diagram illustrating a process of establishing a communication session. The communication session for sending content data between communication terminals includes a communication session "sed1" for sending sound data and image data between the speech terminals 10 and a communication session "sed2" for sending operation information between the IWBs 20.

0054 As illustrated in FIG. 8, the speech terminal 10, in response to an operation by a user through the operation button 108, by means of the transmission/reception unit 11, performs a communication start request to the management system 50 (step S81). The communication start request includes a communication ID of the speech terminal 10 that is a communication start request source and a communication ID of a destination speech terminal 10. In the following description, the communication start request source is assumed to be a speech terminal 10a, and the destination is assumed to be a speech terminal 10c.

0055 The transmission/reception unit 51 of the management system 50 receives the communication start request. Then, the management unit 53 of the management system 50 sets an operation state to "ONLINE (communicating)" for the communication ID of the speech terminal 10a that is the communication start request source in the terminal management table (see FIG. 6B) (step S82).

0056 Next, the transmission/reception unit 51 of the management system 50 performs a communication start request to the destination speech terminal 10c (step S83). The communication start request includes the communication ID of the speech terminal 10a that is the communication start request source of the communication sent at above-described step S81, and the communication ID of the destination speech terminal 10c. Accordingly, the destination speech terminal 10c receives the communication start request.

0057 In relation to the above, the speech terminal 10c, in response to a user's operation with the operation button 108, by means of the transmission/reception unit 11, sends information indicating response decision to the management system 50 (step S84). The information indicating response decision indicates that a response is performed when a user starts speech on the side of the destination speech terminal 10c, and that a response is not performed when the user does not start speech on the side of the destination speech terminal 10c. In the following, the description continues in the case where the speech terminal 10c sends information indicating that the response is performed to the management system 50.

0058 Accordingly, the transmission/reception unit 51 of the management system 50 receives the information indicating response decision. Subsequently, the management unit 53 of the management system 50 sets an operation state to "ONLINE (communicating)" for the communication ID of the destination speech terminal 10c in the terminal management table (see FIG. 6B) (step S85).

0059 Next, the transmission/reception unit 51 of the management system 50 sends to the speech terminal 10a that is the start request source the information indicating that the response is performed which is sent from the destination speech terminal 10c in above-described step S84 (step S86). Accordingly, the speech terminal 10a receives the information indicating that the response is performed by means of the transmission/reception unit 21.

0060 Subsequently, the session control unit 58 of the management system 50 controls establishing the communication session "sed1" for sending image data and sound data via the communication network 2 between the speech terminals (10a, 10c). A method for establishing the communication session "sed1" is not limited, but includes, for example, a method for sending connection information for coupling to a relay apparatus to the speech terminals (10a, 10c) by the transmission/reception unit 51 based on control by the session control unit 58, in a case where the relay apparatus for relaying image data and sound data is arranged on the communication network 2. Moreover, the transmission/reception unit 51 may send to the relay apparatus a request for starting relaying image data and sound data between the speech terminals (10a, 10c) based on the control by the session control unit 58. Moreover, as the method for establishing the communication session "sed1", a known method, such as the method described in FIG. 25 of Patent document 2 may be employed.

0061 Based on the above-described control method, the session "sed1" is established (step S88). Accordingly, the speech terminals (10a, 10c) become able to send/receive image data and sound data to/from the terminals (10c, 10a) which is a communication partner.

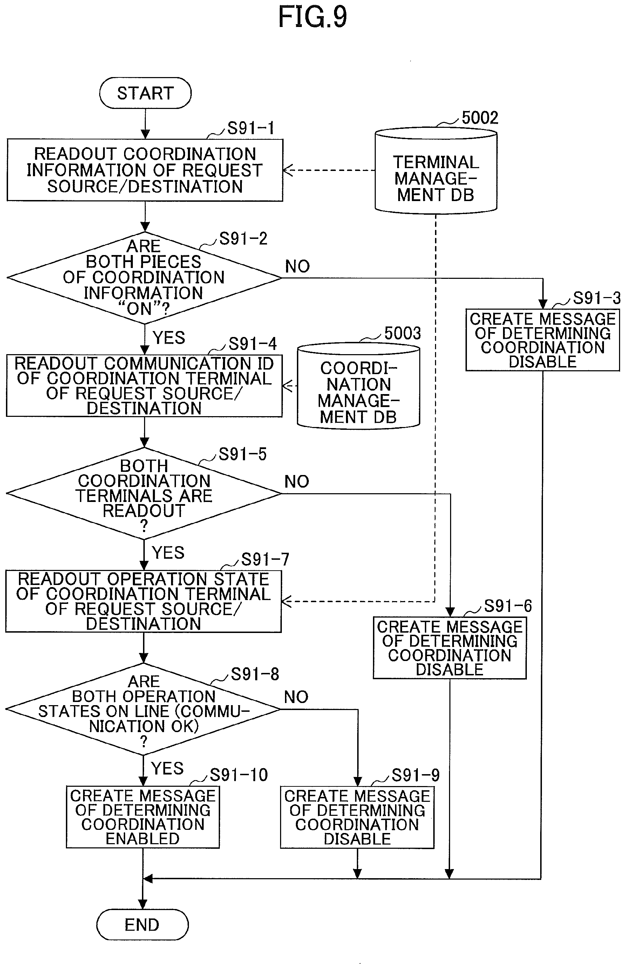

0062 Subsequently, the coordination management unit 57 coordinates with the start of communication between the speech terminals (10a, 10c), and thereby determines whether to start communication between corresponding IWBs 20 (step S91). A process at step S91 will be described in detail with reference to FIG. 9. FIG. 9 is a flowchart depicting the process of determining decision of coordination between communication terminals.

0063 First, the storage/readout unit 59 of the management system 50 searches the terminal management table (See FIG. 6B) with the IDs "01a, 01c" of the respective speech terminals (10a, 10c) of the request source and destination of the start of the communication as search keys, and reads out corresponding coordination information (step S91-1).

0064 Next, the coordination management unit 57 determines whether both pieces of coordination information read out at step S91-1 are "ON" (step S91-2). When, at step S91-1, at least one of the pieces of coordination information is determined to be "OFF" (step S91-2: NO), the coordination management unit 57 determines that the communication terminals cannot be coordinated (step S91-3). In this case, the coordination management unit 57 prepares a message including information for identifying the speech terminal 10 for which the coordination function is "OFF", and information indicating that the communication terminals cannot be coordinated based on the result of the search at step S91-1.

0065 When the both pieces of coordination information are determined to be "ON" at step S91-2 (step S91-2: YES), the storage/readout unit 59 searches the coordination management table (See FIG. 6C) with the communication ID "01a" of the speech terminal 10a that is the request source of the start of the communication and the communication ID "01c" of the speech terminal 10c that is the destination as search keys, respectively, and reads out communication IDs of the IWBs 20 (coordination terminals) that correspond to the communication terminals respectively (step S91-4).

0066 Subsequently, the coordination management unit 57 determines whether, at step S91-4, both communication IDs of the coordination terminals for the speech terminals (10a, 10c) of the request source and destination of the start of the communication are read out (step S91-5). When at least one of the communication IDs of the coordination terminals corresponding to the speech terminals (10a, 10c) of the request source and the destination of the start of the communication is not read out (step S91-5: NO), the coordination management unit 57 determines that the communication terminals cannot be coordinated (step S91-6). In this case, the coordination management unit 57 prepares a message including information for identifying a speech terminal 10 that does not have a corresponding coordination terminal based on the search result at step S91-3, and information indicating that communication terminals cannot be coordinated.

0067 When both the communication IDs of the coordination terminals corresponding to the speech terminals (10a, 10c) of the request source and the destination of the start of the communication are read out (step S91-5: YES), the storage/readout unit 59 searches the terminal management table (See FIG. 6B) with the communication IDs of the respective IWB (20a, 20c) (coordination terminals), which are read out at step S91-4, as search keys, and reads out corresponding operation states (step S91-7).

0068 Subsequently, the coordination management unit 57 determines whether both the operation states, which are read out at step S91-7, are "ONLINE (communication OK)" (step S91-8). At step S91-8, when at least one of the operation states is not determined to be "ONLINE (communication OK)" (step S91-8: NO), the coordination management unit 57 determines that the communication terminals cannot be coordinated (step S91-9). In this case, the coordination management unit 57 prepares a message including information for identifying an IWB 20, an operation state of which is not "ONLINE (communication OK)" based on the search result at step S91-7, and information indicating that the communication terminals cannot be coordinated.

0069 When, at step S91-8, both the operation states are determined to be "ONLINE (communication OK)" (step S91-8: YES), the coordination management unit 57 determines that the communication terminals can be coordinated (step S91-10). In this case, the coordination management unit 57 prepares a message including information to start the coordination between the communication terminals.

0070 Subsequently, returning to FIG. 8, the process after the determination for coordination is completed will be described.

0071 First, the transmission/reception unit 51 of the management system 50 sends the message prepared at step S91-10 to start the coordination, or the message prepared at any of steps S91-3, S91-6 or S91-9 indicating that the communication terminals cannot be coordinated to the speech terminals (10a, 10c) of the request source and the destination of the start of the communication (step S92-1, S92-2).

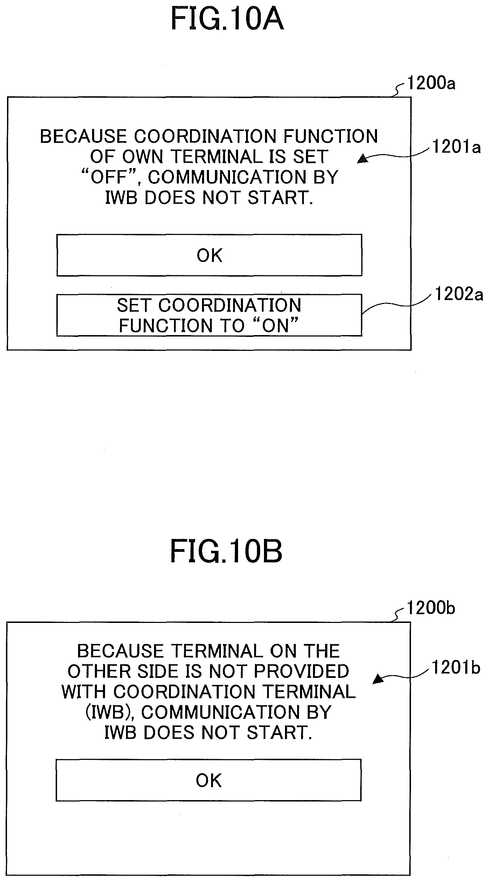

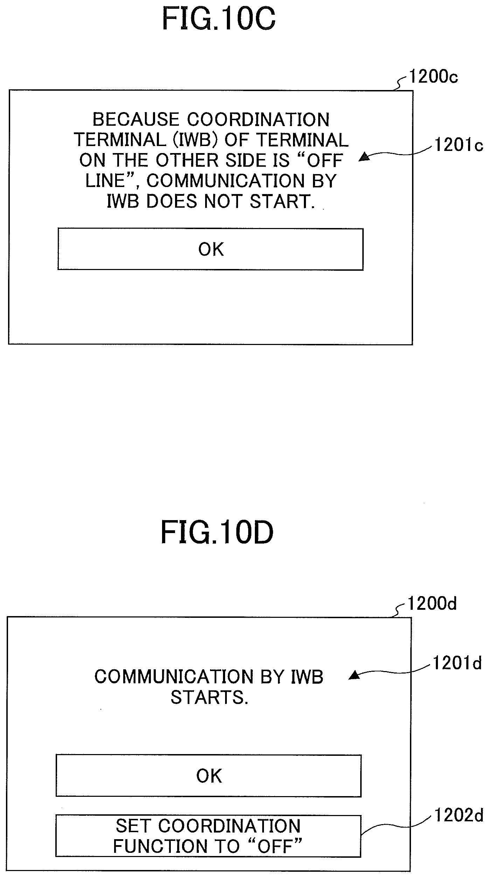

0072 The sent message is received by the respective transmission/reception units 11 of the speech terminals (10a, 10c). The display control unit 13 of each of the speech terminals (10a, 10c) controls the display of the above-described message on the display device 120. FIGs. 10A, 10B, 10C and 10D are diagrams depicting examples of a display screen on the display device 120. On the screens (1200a, 1200b, 1200c, and 1200d), the messages (1201a, 1201b, 1201c, and 1201d) prepared at steps (S91-3, S91-6, S91-9, and S91-10) are displayed, respectively. Moreover, on the screens (1200a, 1200d), buttons (1202a, 1202d) for receiving a change of setting for the coordination function are displayed, respectively.

0073 In the following, the case of determining that the communication terminals can be coordinated at step S91-10 will be described. On the side of the management system 50, the management unit 53 sets the operation state to "ONLINE (communicating)" for the communication ID of each of the coordination terminals (IWB(20a, 20c)) of the source and the destination of the request to start communication, in the terminal management table (See FIG. 6B) (step S94).

0074 Subsequently, the session control unit 58 of the management system 50 controls establishing the communication session sed2 for sending operation data of an electronic pen via the communication network 2 between the IWBs (20a, 20c) (step S95). The method of establishing the communication session sed2 is not particularly limited, but, for example, includes a method in which the transmission/reception unit 51, based on control by the session control unit 58, by sending the communication ID of the communication partner (IWB 20c) to the IWB 20a, causes the IWB 20a to perform a transmission request to the IWB 20c.

0075 Based on the above-described control, the communication session sed2 is established (step S96). Therefore, the IWBs (20a, 20c) can share screens on the IWBs (20a, 20c) by sending/receiving operation data to/from the IWBs (20c, 20a) that are the communication partners.

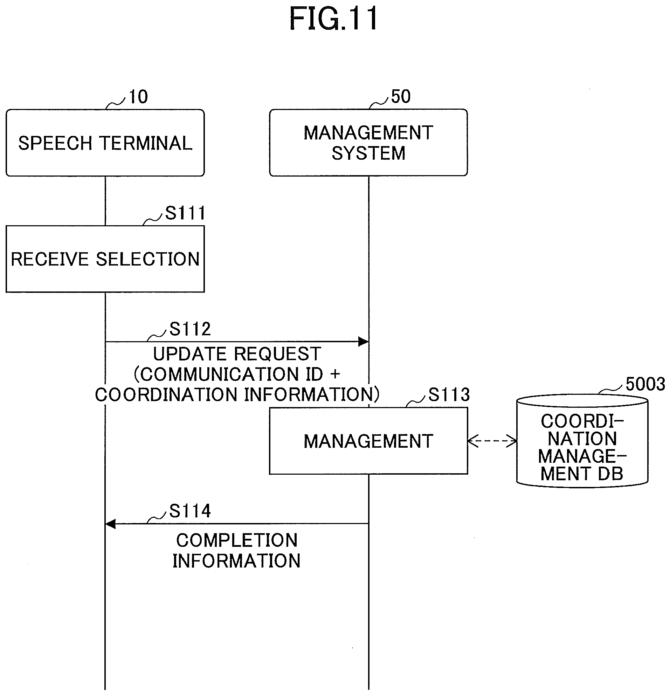

0076 Next, a process of changing setting of the coordination function will be described with reference to FIG. 11. FIG. 11 is a sequence diagram depicting the process of changing setting of the coordination function.

0077 When the user of the speech terminal 10 selects the button (1202a, 1202d) (See FIG. 11) displayed in the screen (1200a, 1200d), the operation input reception unit 12 receives an input of the request to set the coordination function to "ON" or the request to set the coordination function to "OFF" depending on the selected button (step S111).

0078 Subsequently, the speech terminal 10 sends a request for updating the coordination information to the management system 50 through the transmission/reception unit 11 (step S112). The update request includes the communication ID of the speech terminal 10 that is a source of the update request, and the coordination information ("ON or OFF") according to the request received at step S111.

0079 The transmission/reception unit 51 of the management system 50 receives the above-described update request. Subsequently, the management unit 53 sets the coordination information included in the update request to "ON or OFF" for the communication ID included in the update request in the terminal management table (See FIG. 6B) (step S113). According to the above-described process, the coordination information corresponding to the speech terminal 10 that is the source of the update request is updated. Subsequently, the management system 50 completes the process by sending completion information indicating completion of the update to the speech terminal 10 that is the source of the update request.

0080

### «Main effect of embodiment»

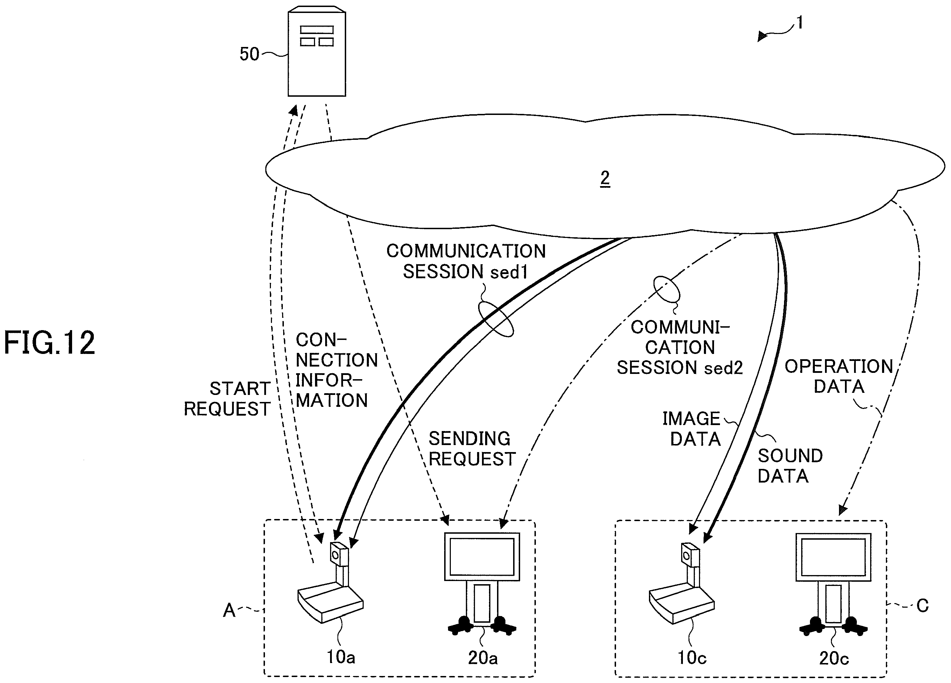

Subsequently, a main effect of the above-described embodiment will be described with reference to FIG. 12. FIG. 12 is a conceptual diagram illustrating a state of sending/receiving various pieces of information in the communication system 1.

0081 The management system 1 (an example of a session control system) controls a session for sending image data and sound data, or content data such as operation data for an electronic pen, between the speech terminals 10 or between various communication terminals such as the IWBs 20. The session control unit 58 (an example of a session control means) of the management system 50 controls establishing the communication session sed1 (an example of a first session) for sending image data and sound data (an example of first content data) between the speech terminal 10a (an example of a first communication terminal) and the speech terminal 10c (an example of a second communication terminal) in response to a request to start communication between the speech terminals (10a, 10c). Additionally, the session control unit 58 controls establishing the communication session sed2 (an example of a second session) for sending operation data for an electronic pen (an example of content data) between the IWB 20a (an example of a predetermined communication terminal) corresponding to the speech terminal 10a and the IWB 20c (an example of a predetermined communication terminal) corresponding to the speech terminal 10c. That is, by sending the request to start communication between the speech terminals (10a, 10c) to the management system 50, not only the communication session sed1 between the speech terminals (10a, 10c) but also the communication session sed2 between the IWBs (201, 20c) are established. Because the user at the base A is not required to input a transmission request for each communication terminal when starting communication between the bases (A, C) using a plurality of communication sessions, burden on the user A is reduced.

0082 The terminal management DB 5002 (an example of an operation state management means) of the management system 50 manages an operation state of the IWB 20 for each communication ID of the IWB 20. The session control unit 58 controls establishing the communication session sed2 according to the respective operation states of the IWBs (20a, 20b) corresponding to the speech terminals (10a, 10c). According to the above-described process, when any of the IWBs (20a, 20c) is not capable of communication, the management system 50 tries to establish the communication session sed2, and thereby a load on the management system 50, the communication network 2 or on the side of the communication terminal can be prevented from increasing.

0083 The transmission/reception unit 51 (an example of a specific information transmission means) of the management system 50 sends, when the operation state of the IWB 20 is not an operation state indicating being capable of communication, a message for identifying the IWB 20, that is not in the operation state indicating being capable of communication, to at least one of the speech terminals (10a, 10c). On the side of the speech terminal 10 that received the specific information, by means of a phone call via the communication session sed1, a communication partner can be notified that the IWB 20 is not in a state of being capable of communication.

0084 The coordination management DB 5003 (an example of a coordination terminal management means), for each communication ID of the speech terminal 10, associates and manages the communication ID of the IWB 20 that starts communication in coordination with the respective speech terminal 10. According to the above-described process, because the session control unit 58 can specify the IWB 20 that is a destination of coordination based on the respective communication IDs of the IWB (20a, 20c) associated with the communication ID of the speech terminals (10a, 10c) in the coordination management DB 5003, the session control unit 58 can control establishing the communication session sed2.

0085 The terminal management DB 5002 (an example of a coordination information management means), for each communication ID of the speech terminal 10, associates coordination information, indicating whether to coordinate with the speech terminal 10 to start communication of the IWB 20, with the communication ID of the speech terminal, and manages the communication ID. The session control unit 58 controls establishing the communication session sed2 according to respective pieces of coordination information associated with the communication ID of the respective speech terminals (10a, 10c), that are managed in the terminal management DB 5002. According to the above-described configuration, when coordination is not desired on the transmission side or the reception side, the coordination function can be invalidated.

0086 The transmission/reception unit 11 (an example of a receiving means) of the communication terminal 10 receives the above-described message sent from the management system 50. Moreover, the display control means 13 controls display of information for identifying the IWB 20 that is not capable of communication, based on the received message. The user of the communication terminal 10 can identify the IWB 20 that is not capable of communication based on the display.

0087

### «Supplement to embodiment»

In the above description, the case of starting communication between the IWBs 20 in coordination with the start of communication between the speech terminals 10 has been described. However, the invention is not limited to the above-described embodiment. For example, in coordination with the start of communication between the IWBs 20, the communication between the speech terminals 10 may be started. Moreover, in coordination with the end of communication between the speech terminals 10, the communication between the IWBs 20 may be ended. In this case, at steps (S81, S83), an end request is sent instead of the start request, and at steps (S87, S95), control of uncoupling the communication sessions (sed1, sed2) is performed instead of the control of establishing the communication sessions.

0088 In the above description, the case of coordinating the start of communication between two communication terminals 10 with the start of communication between two IWBs 20 has been described. However, the invention is not limited to the above - described embodiment. For example, the start of communication from within three or more communication terminals 10 may be coordinated with the start of communication from within three or more IWBs 20. In this case, at step S91, the coordination is determined for each speech terminal 10 or for each corresponding IWB 20 (coordination terminal). That is, while starting communication of an IWB 20 in coordination with a start of communication of a speech terminal 10, when an operation state of another IWB 20 is not in a state of being capable of communication, it is possible to not initiate communication of the other IWB 20.

0089 Furthermore, respective programs for the speech terminal 10, the IWB 20, and the management system 50 may be recorded in a recording medium 106 or the like, that can be read in a computer, as a file of an installable format or an executable format, and distributed. Moreover, the above-described recording medium includes, for example, a CD-R (Compact Disc Recordable), a DVD (Digital Versatile Disk), and a Blu-Ray disk.

0090 Moreover, the management system 50 in the embodiment may be constructed by a single computer, or a plurality of computers to which parts obtained by dividing respective portions (functions or means) are assigned.

0091 Moreover, a recording medium, such as a CD-ROM storing the respective programs according to the embodiment and the HD 504 storing the programs can be provided domestically or abroad as a program product.

0092 Moreover, in the above description, the video conference terminal has been described as an example of the speech terminal 10. However, the invention is not limited to this. For example, the speech terminal 10 may be an IP (Internet Protocol) telephone set, an internet telephone set, a personal computer (PC), or the like.

0093 Furthermore, in the above description, a telephone call performed by the speech terminal (intermediate concept) such as a video conference terminal (lower concept) has been described. However, the invention is not limited to this, and communication only has to be performed as a wider concept including the telephone call. For example, the embodiment can also be applied in a case where an application program accesses a server of a center by itself, and sends and acquires various pieces of data. In this case, the communication partner may be a server instead of the speech terminal. Moreover, the speech terminal includes a gaming machine, a car navigation system, or the like.

0094 The present application is based on Japanese Priority Application No. 2014-171146 filed on August 26, 2014. The entire contents of the application are incorporated herein by reference.

### [Reference Signs List]

0095
- 1: communication system
- 2: communication network
- 10: speech terminal
- 20: IWB
- 11,21: transmission/reception unit
- 12,22: operation input reception unit
- 13,23: display control unit
- 19,29: storage/readout unit
- 50: management system
- 51: transmission/reception unit
- 52: authentication unit
- 53: management unit
- 57: coordination management unit
- 58: session control unit
- 59: storage/readout unit
- 1000: storage unit
- 5000: storage unit
- 5001: authentication management DB
- 5002: terminal management DB
- 5003: coordination management DB

## Claims

1. A session control system for controlling a session for sending content data between communication terminals, comprising:
a session control unit configured to control establishing a first session for sending first content data between a first communication terminal and a second communication terminal in response to a request for starting communication between the first communication terminal and the second communication terminal, and
configured to control establishing a second session for sending second content data between a predetermined communication terminal corresponding to the first communication terminal and a predetermined communication terminal corresponding to the second communication terminal.

2. The session control system according to claim 1 further comprising:
an operation state management unit, for each predetermined communication terminal, configured to manage an operation state of the predetermined communication terminal,
wherein the session control unit is configured to control establishing the second session according to the operation state of the predetermined communication terminal corresponding to the first communication terminal and the operation state of the predetermined communication terminal corresponding to the second communication terminal, which are managed by the respective operation state management unit.

3. The session control system according to claim 2 further comprising:
a specific information transmission unit configured to send, when an operation state of a predetermined communication terminal is not an operation state indicating being capable of communication, specific information for specifying the predetermined communication terminal to at least one of the first communication terminal and the second communication terminal.

4. The session control system according to any one of claims 1 to 3 further comprising:
a coordination terminal management unit configured to associate and to manage, for each of the communication terminals, identification information of the predetermined communication terminal that starts communication in coordination with the respective communication terminal, and manages the identification information,
wherein the session control unit is configured to control establishing the second session, in the coordination terminal management unit, based on identification information of the predetermined communication terminal associated with the first communication terminal and identification information of the predetermined communication terminal associated with the second communication terminal.

5. The session control system according to any one of claims 1 to 4 further comprising:
a coordination information management unit configured to manage, for each of the communication terminals, coordination information indicating whether to start communication of the predetermined communication terminal in coordination with the communication terminal,
wherein the session control unit is configured to control establishing the second session, according to the coordination information corresponding to the first communication terminal and the coordination information corresponding to the second communication terminal, which are managed by the coordination information management unit.

6. A communication terminal comprising
a reception unit configured to receive the specific information sent from the session control system according to claim 3; and
a display control unit configured to control displaying information for specifying the predetermined communication terminal based on the specific information.

7. A communication system comprising:
the session control system according to any one of claims 1 to 5;
the communication terminals; and
the predetermined communication terminals.

8. The communication system according to claim 7,
wherein the communication terminal is a speech terminal, and
wherein the predetermined communication terminal is an interactive white board.

9. A session control method for enabling a session control system for controlling a session for sending content data between communication terminals,
to control establishing a first session for sending first content data between a first communication terminal and a second communication terminal in response to a request for starting communication between the first communication terminal and the second communication terminal, and
to control establishing a second session for sending second content data between a predetermined communication terminal corresponding to the first communication terminal and a predetermined communication terminal corresponding to the second communication terminal.

10. A program for causing the session control system to enable the respective units according to any one of claims 1 to 5.
